# EUROPEAN PATENT APPLICATION

(11) **EP 1 022 042 A1**
(43) Date of publication of application: **26.07.2000**
(21) Application number: 00200251.7
(22) Date of filing: 24.01.2000
(51) Int. Cl.: B01D 47/06, B01D 50/00

(54) **Method for cleaning gases**

(30) Priority: 22.01.1999 NL 1011111
(71) Applicant: Sara Lee/DE N.V., 3532 AA Utrecht (NL)
(72) Inventor: Wold, Willem Harm, 8502 BP Joure (NL); de Jong, Lieuwe, 8501 RD Joure (NL)
(74) Representative: Ottevangers, Sietse Ulbe

(57) **Abstract**

A method for removing contaminants from an exhaust gas, which contains contaminants, preferably originating from a smokehouse for foods or from frying or deep-frying of products, wherein a liquid is atomized in the exhaust gases and the liquid with the contaminants absorbed therein is then removed by precipitating the liquid mist and discharging the liquid.

## Description

The invention The invention relates to the removal of contaminants from a gas stream, which, e.g., originate from a smokehouse for foods, or which contain fats, e.g. originating from frying or deep-frying, and to an apparatus for carrying out the method.

Smoking foods is an age-old method for preserving foods. Although in the course of time a multiplicity of other preservation methods have been developed and, in addition, ample experience has been gained with the use of chemical preservatives and preservatives based on natural raw materials, smoked foods have not lost much of their popularity. At present this has not so much to do with storage life as with an appreciation of the smoked flavor. Hence a wide range of foods in smoked form is known to the consumer.

Smoking foods can in general be carried out in two manners. One, more modern, manner is the addition of so-called liquid smoke to foods so as to obtain the desired flavor effect. A second manner is the classic manner of smoking on wood. To this end, the foods to be smoked are suspended in the smoke from, e.g., a smoldering fire for a specific length of time. The traditional character of this method is still considered by the consumer to be very attractive. Hence, to meet this need of the consumer, foods are still smoked on a large scale at present.

During smoking, a part of the smoke is absorbed by the foods. A large part of the smoke, however, is emitted. In view of the emission standards tightened up, this is a significant drawback of the classic smoking method. A second aspect of large-scale smoking is the odor nuisance occurring during the emission of the smoke gases.

Also when frying or deep-frying products, gases can be formed which contain contaminants, e.g. in the form of fat drops. These must be removed from the exhaust gases.

There is therefore a distinct need for a manner of removing contaminants and odor components from smoke.

To remove contaminants from the emitted exhaust gases, methods are known per se in which the smoke gases are subjected to a thermal or catalytic post-combustion. These are in general methods with a high energy consumption, which makes these methods expensive. Oxidation of the contaminants with ozone at low temperature has also been tried, with a poor result. Filtering the smoke gases to simultaneously remove the contaminants and the odor components has been tried, e.g. with activated carbon in different forms and with biofilters. In the first instance, this seems to lead to good results. However, the attendant problem is that the contaminants from the smoke gases at least partially consist of tar-like components. This results in the filters being clogged, with the result that they only have a short service life.

One of the methods with which satisfactory results were obtained is a method in which electrofilters are placed in the stream of smoke gases followed by gas washers in which an acid and a basic washing are carried out. This effectively removes the tar-like contaminants. The odor component is then removed in an activated carbon filter. However, the combination of electrofilters with two gas washers is a relative expensive and complex solution for the removal of tar-like components. When removing fats or contaminants based thereon, similar problems occur.

From considerations of process economy, there is therefore a need for a simple and relatively inexpensive method for removing contaminants and odors from exhaust gases.

To solve the above problems and to develop a method for removing contaminants from exhaust gases and removing odor components from smoke gases, the following invention has been made.

The invention relates to a method for removing contaminants from an exhaust gas which contains hydrophobic and/or tar-like contaminants, such as smoke gases originating from a smokehouse for foods, wherein a liquid is atomized in the stream of smoke gases and the liquid with the contaminants absorbed therein is then removed by precipitating the liquid mist and discharging the liquid.

Smoke, as originating from a smokehouse, generally consists of unburned or poorly burned (more or less volatile or sublimable) residues, mostly in the form of tar-like compounds, and of volatile compounds which provide the odor component. When smoking foods, fats and volatile odor components from the foods themselves are added thereto.

The stream of smoke gases exhausted from the smoking furnace or from another source of such gases, by means of, e.g., a fan or another device for displacing air, is passed to a device where a liquid is atomized in the stream of smoke gases. A suitable liquid is, e.g., water or aqueous solutions. Different additions may be made to this water, e.g. to neutralize the pH of the smoke, or surfactants causing the absorption to proceed better.

Without wishing to limit thereto, the idea is that, by atomizing a liquid in the stream of exhaust gases, drops are formed with which the contaminants coagulate or by which they are absorbed. Atomizing the water in the stream of smoke gases can be effected by means of any sprayer suitable therefor. The thus formed aggregates of smoke particles, contaminants and/or fat particles and water are passed over a column or a bed packed with contact-improving means such as, e.g., Raschig rings, Sulzer rings, Pall rings, spherical bodies, tubes, rings, plates, and the like. By providing the bed with a packing with a high passage, turbulence occurs, as a result of which the aggregates further flow together and precipitate on the contact-improving means, after which they can be discharged. In this connection, the term precipitation is understood to mean that the individual liquid particles flow together and create a substantially continuous aqueous phase.

The smaller aggregates of contaminants and liquid which are possibly not precipitated into the bed can then be removed in a so-called aerosol remover (also referred to as settling chamber or knock-out drum). In an aerosol remover the velocity of the gas is suddenly strongly reduced, as a result of which even the relatively smaller aggregates (aerosols) can be precipitated and discharged.

Smoke particles have typical dimensions of the order of 1-2 µm. To improve the aggregating effect of the liquid mist and the generally more lipophilic smoke particles or fat particles, it is possible to inject steam, prior to the atomization of the liquid in the stream of smoke gases. Without being tied down to a theory, the idea is that the smoke particles function as condensation nuclei. By injecting steam, the liquid then condenses on the smoke particles. Because of this, the efficiency of the next step, the atomization of water to form small droplets, is substantially increased. The steam injection has a favorable effect on the whole process. In a preferred embodiment of the present method, the method therefore comprises the following steps of:
- injecting steam,
- atomizing a liquid in the stream of exhaust gases,
- precipitating the liquid mist, and
- discharging the liquid.

It is also possible with this method to precipitate any smoke particles and/or oils and fats present in the exhaust gases, whether or not in the form of an aerosol. This renders it possible to also purify exhaust gases which (partly) contain fat smoke components, such as exhaust gases from frying or deep-frying.

After the stream of smoke gases has passed the aerosol remover, it is possible that the stream of smoke gases still contains smoke particles, which may or may not be absorbed or aggregated with water drops. To remove these too, it is possible in an embodiment of the invention to atomize and precipitate liquid for the second time.

This can be effected in an embodiment of the present invention by placing an atomizer which atomizes water in the stream of smoke gases. Such an atomizer may be, e.g., a sprayer or a nozzle, whether or not in combination with a means for spreading water in a space, e.g. a fan. Thus, the efficiency of the removal of the contaminants can be further increased.

The odor components can now be removed from the stream of smoke gases by passing the stream of smoke gases through a conventional deodorizing unit such as, e.g. a biofilter or an activated carbon filter. In a more preferred embodiment of the invention, a method is therefore carried out which comprises the following steps of:
- injecting steam into the stream of smoke gases,
- atomizing a liquid in the stream of smoke gases,
- aggregating and precipitating the liquid mist from the stream of smoke gases,
- reducing the current velocity of the stream of smoke gases,
- discharging the precipitated liquid, and
- passing the stream of smoke gases through a deodorizing unit.

The invention also comprises an apparatus for removing contaminants from a gas stream, which apparatus comprises means for atomizing a liquid in the gas stream and means for precipitating the liquid.

In a preferred embodiment the means for separating the liquid consist of a column or a bed, optionally filled with contact-improving means and/or an aerosol remover. Moreover, after the aerosol remover there can be provided further means for removing the remaining smoke particles.

In a preferred embodiment the apparatus also comprises means for injecting steam. The means for injecting steam are mostly placed before the means for atomizing the liquid.

To remove the odor component from the smoke gases, an activated carbon filter or a biofilter can be used in a preferred embodiment of the present invention.

In a preferred embodiment of the present invention, it is possible to place means for removing remaining smoke particles. This can be effected by placing means for supplying liquid to the gas stream, optionally followed by means for increasing the pressure. These two means can be present in integrated condition. The means for supplying the liquid can be chosen from, e.g., a sprayer, a nozzle or a rotating paddle blade, such as a fan.

The means for increasing the pressure can also be the means for spreading liquid in the space. Means for increasing a pressure difference can be formed, e.g., by a rotary body provided with blades, e.g. a fan. As a result of the liquid or liquid mist coming into contact with the blades of the fan, the rotary motion of the fan blades effects a radial outward movement of the liquid drops, which results in a fine atomization of the liquid in the space, as a result of which the remaining smoke particles can be collected.

It should be noted that the increase of the pressure is particularly effected to provide gas transport and - velocity.

### Description of the figures:

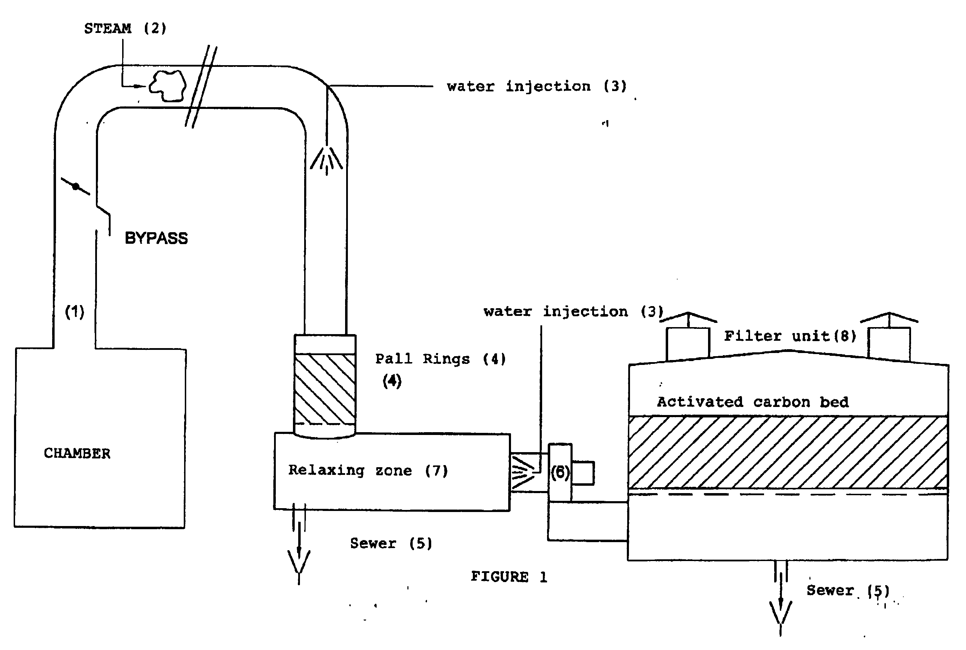

Fig. 1 is a schematic view of an apparatus for cleaning smoke gases according to the invention.

In this figure smoke gases (1) originating from a chamber are discharged, while steam (2) is injected into the stream of gases. Subsequently, a liquid (3) is injected, after which the stream of gases is passed over a bed with Pall rings (4), while a part of the mist is separated and discharged to the sewer (5). The stream of gases is now passed on via a relaxing zone or knock-out drum (7) to a second liquid injection point (3) before a fan (6). The remaining stream of gases is then passed through a filter unit (8) which, inter alia, comprises an activated carbon bed.

## Claims

1. A method for removing contaminants from an exhaust gas which contains contaminants, preferably originating from a smokehouse for foods or from frying or deep-frying of products, wherein a liquid is atomized in the exhaust gases and the liquid with the contaminants absorbed therein is then removed by precipitating the liquid mist and discharging the liquid.

2. A method according to claim 1, wherein the liquid used is water.

3. A method for removing contaminants from a stream of exhaust gases originating from a smokehouse for foods, which comprises the following steps of:
- injecting steam,
- atomizing a liquid, preferably water, in the stream of smoke gases,
- precipitating the liquid mist, and
- discharging the liquid.

4. A method according to claims 1-3, which comprises the following steps of:
- injecting steam into the stream of smoke gases,
- atomizing a liquid in the stream of smoke gases;
- precipitating the liquid mist from the stream of smoke gases,
- reducing the current velocity of the stream of smoke gases,
- discharging the precipitated liquid, and
- passing the stream of smoke gases through a deodorizing unit.

5. A method according to any of the preceding claims, wherein the liquid is water or an aqueous solution.

6. A method according to claims 1-5, wherein contaminants present in the exhaust gases, which are precipitated, consist mainly of smoke particles and/or fats and oils, whether or not in the form of aerosols.

7. An apparatus for removing contaminants from a gas stream, which apparatus comprises means for atomizing a liquid in the gas stream and means for precipitating the liquid.

8. An apparatus according to claim 7, wherein the means for separating the liquid comprise a column or a bed, optionally filled with contact-improving means and/or an aerosol remover.

9. An apparatus according to claim 7 or 8, which also comprises means for injecting steam.

10. An apparatus according to claims 7-9, which also comprises an activated carbon filter or a biofilter.

11. An apparatus according to claims 7-10, wherein means for supplying liquid to the gas stream and means for increasing the pressure are present.

12. The use of the method for removing contaminants from gas streams originating from smokehouses for foods.
